# EUROPEAN PATENT APPLICATION

(11) **EP 4 819 233 A1**
(43) Date of publication of application: **07.10.2026**
(21) Application number: 24952609.6
(22) Date of filing: 30.09.2024
(51) Int. Cl.: H01M 4/36

(54) **POSITIVE ELECTRODE ACTIVE MATERIAL AND PREPARATION METHOD THEREFOR, POSITIVE ELECTRODE SHEET, BATTERY, AND ELECTRICAL DEVICE**

(30) Priority: 30.08.2024 CN 202411218275
(71) Applicant: Beijing Easpring Material Technology Co., Ltd., Beijing 100160 (CN)
(72) Inventor: HE, Can, Beijing 100160 (CN); SONG, Shunlin, Beijing 100160 (CN); LIU, Yafei, Beijing 100160 (CN); CHEN, Yanbin, Beijing 100160 (CN)
(74) Representative: Nederlandsch Octrooibureau
(86) International application number: PCT/CN2024/122990
(87) International publication number: WO 2026/044873

(57) **Abstract**

A cathode active material and a preparation method therefor, a cathode sheet, a battery, and an electrical device, relating to the technical field of batteries. In an XRD pattern of the cathode active material, a characteristic peak C (018) corresponding to (018) crystal plane of the cathode active material exhibits a double-peak distribution, including a first characteristic peak C¹ (018) and a second characteristic peak C² (018); and a characteristic peak D (110) corresponding to (110) crystal plane of the cathode active material exhibits a double-peak distribution, including a first characteristic peak D¹ (110) and a second characteristic peak D² (110). I_{C1} denotes the intensity of the first characteristic peak C¹ (018), and I_{D1} denotes the intensity of the first characteristic peak D¹ (110), and 0.80≤I_{D1}/I_{C1}≤1.00. Thus, the initial charge/discharge efficiency, discharge capacity, cycling performance, and safety performance of a battery including the cathode active material can be effectively improved, and the impedance of the battery can be reduced.

## Description

### PRIORITY INFORMATION

This application claims priority to and benefits of Chinese Patent Application No. 202411218275.2, filed with China National Intellectual Property Administration on August 30, 2024, the entire disclosure of which is incorporated herein by reference.

### FIELD

The present disclosure belongs to the field of batteries, and particularly, relates to a cathode active material and a preparation method thereof, a cathode electrode plate, a battery, and an electrical device.

### BACKGROUND

Lithium-ion batteries, due to their advantages such as high energy density, long cycle life, and environmental friendliness, have become a predominant power supply for portable electronic devices, electric vehicles, and energy storage systems. Currently, cathode materials for lithium-ion batteries that are most widely used in the market mainly include lithium cobalt oxide, nickel-cobalt-manganese ternary layered materials, lithium iron phosphate, lithium manganese iron phosphate, and lithium manganate oxide spinel cathode materials. Among them, nickel-cobalt-manganese ternary layered materials are considered ideal candidates for cathode materials of lithium-ion batteries due to their relatively high theoretical specific capacity (about 274 mAh/g). However, element cobalt suffers from issues such as resource scarcity, high cost, and environmental pollution. Therefore, the research, development, and application of low-cobalt or even cobalt-free cathode materials have attracted extensive attention.

In nickel-cobalt-manganese ternary layered materials, a reduction in the content of the element cobalt leads to problems such as decreased initial charge/discharge efficiency, deteriorated rate capability, degraded cycling performance, and increased impedance of a battery, which seriously restricts popularization and application of low-cobalt and cobalt-free layered cathode materials.

### SUMMARY

The present disclosure aims to solve one of the technical problems in the related art at least to some extent. To this end, an object of the present disclosure is to provide a cathode active material and a preparation method thereof, a cathode electrode plate, a battery, and an electrical device, so as to address the issues that a reduction in cobalt content leads to decreased initial charge/discharge efficiency, deteriorated rate capability, degraded cycling performance, and increased impedance of the battery.

In a first aspect of the present disclosure, the present disclosure provides a cathode active material. According to an embodiment of the present disclosure, the cathode active material includes:

In an X-ray diffraction (XRD) pattern of the cathode active material, a characteristic peak C (018) corresponding to (018) crystal plane of the cathode active material has a double-peak profile including a first characteristic peak C¹ (018) located on a low-angle side and a second characteristic peak C² (018) located on a high-angle side;

A characteristic peak D (110) corresponding to (110) crystal plane of the cathode active material has a double-peak profile including a first characteristic peak D¹ (110) on a low-angle side and a second characteristic peak D² (110) on a high-angle side.

The cathode active material satisfies 0.80≤I_{D1}/I_{C1}≤1.00, in which I_{C1} represents an intensity of the first characteristic peak C¹ (018) corresponding to the (018) crystal plane of the cathode active material, and I_{D1} represents an intensity of the first characteristic peak D¹ (110) corresponding to the (110) crystal plane of the cathode active material.

The cathode active material according to an embodiment of the present disclosure effectively improves the structural stability and interfacial stability of the cathode active material, and also effectively reduces the degree of Li/Ni cation mixing of the cathode material, thereby effectively improving the cycling performance, initial charge/discharge efficiency, discharge capacity, and safety performance of the battery, while also effectively reducing the initial impedance and impedance increase of the battery.

In addition, the cathode active material according to the above embodiment of the present disclosure may further have the following additional technical features.

In some embodiments of the present disclosure, I_{C1} and I_{D1} satisfy 0.85≤I_{D1}/I_{C1}≤0.95.

In some embodiments of the present disclosure, the cathode active material satisfies 0.80≤A_{D1}/A_{C1}≤1.05, in which: A_{C1} represents a peak area of the first characteristic peak C¹ (018) corresponding to the (018) crystal plane of the cathode active material, and A_{D1} represents a peak area of the first characteristic peak D¹ (110) corresponding to the (110) crystal plane of the cathode active material.

In some embodiments of the present disclosure, the cathode active material satisfies 0.85≤A_{D1}/A_{C1}≤1.00.

In some embodiments of the present disclosure, the cathode active material satisfies 0.35°≤S_{D1}-S_{C1}≤0.65°, in which: S_{C1} represents a value of 2θ of the first characteristic peak C¹ (018) corresponding to the (018) crystal plane of the cathode active material, and S_{D1} represents a value of 2θof the first characteristic peak D¹ (110) corresponding to the (110) crystal plane of the cathode active material.

In some embodiments of the present disclosure, the cathode active material satisfying 0.40°≤S_{D1}-S_{C1}≤0.60°.

In some embodiments of the present disclosure, the cathode active material satisfies 1.77≤I_{C1}/I_{C2}≤1.98 and 1.78≤I_{D1}/I_{D2}≤2.19, in which: I_{C2} represents an intensity of a second characteristic peak C² (018) corresponding to the (018) crystal plane of the cathode active material, and I_{D2} represents an intensity of a second characteristic peak D² (110) corresponding to the (110) crystal plane of the cathode active material.

In some embodiments of the present disclosure, the cathode active material satisfies 1.80≤I_{C1}/I_{C2}≤1.95 and 1.80≤I_{D1}/I_{D2}≤2.00.

In some embodiments of the present disclosure, the cathode active material satisfies 0°<F_{C1}≤0.20° and 0°<F_{D1}≤0.20°, in which: F_{C1} represents a full width at half maximum of the first characteristic peak C¹ (018) corresponding to the (018) crystal plane of the cathode active material, and F_{D1} represents a full width at half maximum of the first characteristic peak D¹ (110) corresponding to the (110) crystal plane of the cathode active material.

In some embodiments of the present disclosure, the cathode active material satisfies 0.05°≤F_{C1}≤0.15° and 0.05°≤F_{D1}≤0.15°.

In some embodiments of the present disclosure, the cathode active material has a chemical formula of Liₐ(NiₓCo_{y}Mn_{z}M_{b}R_{c})O₂, where: 0.95≤ a≤1.10, 0.50≤x≤0.95, 0≤y≤0.05, 0≤z≤0.45, 0≤b≤0.05, 0≤c≤0.03, and at least one of b and c is not 0; and M and R are each independently selected from at least one of B, Mg, Sr, Ba, Fe, Cu, Ni, Co, Mn, Sc, Y, La, Ce, Sm, Eu, Gd, Tb, Dy, Yb, Lu, Ti, Zr, Hf, V, Nb, Ta, Cr, Mo, W, Ru, Rh, Ir, Zn, Al, Ga, In, Si, Pb, Cd, Ge, Sn, Sb, Bi, or Te.

In some embodiments of the present disclosure, the cathode active material includes a substrate material and a coating layer. The coating layer is disposed on at least a portion of a surface of the substrate material.

In some embodiments of the present disclosure, the coating layer includes a continuous coating layer and a coating protrusion protruding from a surface of the continuous coating layer. The coating protrusion includes at least one of a point-shaped coating and an island-shaped coating.

In some embodiments of the present disclosure, the continuous coating layer includes at least one of Al-containing lithium cobalt oxide, W-containing lithium cobalt oxide, Zr-containing lithium cobalt oxide, or B-containing lithium cobalt oxide; and/or the coating protrusion includes at least one of aluminum oxide, tungsten oxide, titanium oxide, boron oxide, strontium oxide, Al-containing lithium oxide, W-containing lithium oxide, Ti-containing lithium oxide, B-containing lithium oxide, or Sr-containing lithium oxide.

In a second aspect of the present disclosure, the present disclosure provides a method for preparing the above-mentioned cathode active material. The method includes:
mixing a nickel-cobalt-manganese precursor, a first lithium source, and a first doping additive in a stoichiometric ratio, and performing a first sintering to obtain a first sintered product;
mixing the first sintered product with a second lithium source and an optional second doping additive in a stoichiometric ratio, and performing a second sintering to obtain a second sintered product; and
mixing the second sintered product with a coating agent, and performing a third sintering to obtain the cathode active material.

In the method for preparing the above-mentioned cathode active material according to an embodiment of the present disclosure, the lithium source is added in batches in the two sintering treatments (that is, a first portion of the lithium source is added in the first sintering, and a second portion of the lithium source is added in the second sintering). As a result, the formation of impurity phases can be prevented during preparation of a single-crystal substrate at a high temperature with an excessive lithium source. Meanwhile, the generation of microscopic stress can be reduced, enabling more sufficient single crystallization of the substrate material. Furthermore, the doping additive is added in the two sintering treatments, so as to obtain a structurally stable substrate material that has both bulk doping and surface doping. The surface of the substrate material is further coated to modify the surface and interface of the substrate material. On the one hand, the direct contact between the cathode active material and an electrolyte can be effectively isolated to reduce side reactions, thereby effectively improving the electrochemical performance and safety performance of the battery. On the other hand, the ionic and electronic conductivity of the cathode material can also be effectively improved, thereby effectively improving the discharge capacity and cycling performance of the battery.

In some embodiments of the present disclosure, the first sintering includes a first heating stage and a first constant-temperature stage. A heating rate of the first heating stage ranges from 1°C/min to 15°C/min, a temperature of the first constant-temperature stage ranges from 600°C to 1,000°C, and a duration of the first constant-temperature stage ranges from 2 hours to 20 hours. Additionally, or alternatively, the second sintering includes a second heating stage, a third heating stage, and a second constant-temperature stage. A heating rate of the second heating stage is greater than a heating rate of the third heating stage, and a difference between the heating rate of the second heating stage and the heating rate of the third heating stage ranges from 1°C/min to 5°C/min. A temperature of the second constant-temperature stage ranges from 600°C to 1,200°C, and a duration of the second constant-temperature stage ranges from 2 hours to 24 hours.

In some embodiments of the present disclosure, the first doping additive is selected from at least one of an oxide containing doping element M or a hydroxide containing doping element M; and/or the second doping additive is selected from at least one of an oxide containing doping element R or a hydroxide containing doping element R; and/or the first lithium source includes lithium carbonate, the second lithium source includes lithium hydroxide, and a molar ratio of the first lithium source to the second lithium source is (30 to 90):(10 to 70).

In some embodiments of the present disclosure, said mixing the second sintered product with the coating agent, and performing the third sintering includes: mixing the second sintered product with a first coating agent, and performing the third sintering to obtain a third sintered product; and mixing the third sintered product with a second coating agent, and performing a fourth sintering to obtain the cathode active material.

In some embodiments of the present disclosure, the third sintering includes a fourth heating stage and a third constant-temperature stage. A heating rate of the fourth heating stage ranges 1°C/min to 15°C/min, a temperature of the third constant-temperature stage ranges from 500°C to 1000°C, and a duration of the third constant-temperature stage ranging from 2 hours to 20 hours. Additionally, or alternatively, the fourth sintering includes a fifth heating stage and a fourth constant-temperature stage. A heating rate of the fifth heating stage ranges from 1°C/min to 15°C/min, a temperature of the fourth constant-temperature stage ranges from 200°C to 800°C, and a duration of the fourth constant-temperature stage ranges from 2 hours to 20 hours.

In some embodiments of the present disclosure, the first coating agent is selected from at least one of an oxide, a hydroxide or a carbonate containing Al, W, Zr, or B; and/or the second coating agent is selected from at least one of an oxide, a hydroxide or a carbonate containing Al, W, Ti, B, or Sr; and/or a mass of the first coating agent is 0.01% to 2% of a mass of the second sintered product; and/or a mass of the second coating agent is 0.01% to 2% of a mass of the third sintered product.

In a third aspect of the present disclosure, the present disclosure provides a cathode electrode plate. According to an embodiment of the present disclosure, the cathode electrode plate includes the cathode active material according to the first aspect of the present disclosure.

In a fourth aspect of the present disclosure, the present disclosure provides a battery. According to an embodiment of the present disclosure, the battery includes the cathode electrode plate according to the third aspect of the present disclosure.

In a fifth aspect of the present disclosure, the present disclosure provides an electrical device. According to an embodiment of the present disclosure, the electrical device includes the battery according to the fourth aspect of the present disclosure.

Additional aspects and advantages of the embodiments of the present disclosure will be provided at least in part in the following description, or will become apparent in part from the following description, or can be learned from the practice of the embodiments of the present disclosure.

### BRIEF DESCRIPTION OF THE DRAWINGS

FIG. 1 is an XRD pattern of the low-cobalt layered cathode materials according to Example 3 and Comparative Example 4.
FIG. 2 is an SEM image after four sintering treatments according to Example 1.
FIG. 3 is a graph of the cycling capacity retention of batteries prepared from the low-cobalt layered cathode materials according to Example 1, Example 3, Example 4, Example 7, and Comparative Example 1.

### DETAILED DESCRIPTION OF THE EMBODIMENTS

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present disclosure.

Endpoint values or any values of ranges disclosed in the present disclosure are not limited to the precise ranges or values. These ranges or values should be understood to include values close to these ranges or values. For numerical ranges, one or more new numerical ranges can be obtained by combining point values within the respective ranges, an endpoint value and an individual point value within the respective ranges, and individual point values within the respective ranges, and these numerical ranges should be regarded as specifically disclosed in the present disclosure.

The present disclosure is provided by the inventors based on the following technical problems.

The inventors have found that, in nickel-cobalt-manganese ternary layered materials, a reduction in the cobalt content causes severe Li/Ni cation mixing, poor electronic conductivity, and a slow lithium-ion migration rate of cathode materials, which further leads to problems such as decreased initial charge/discharge efficiency, deteriorated rate capability, degraded cycling performance, and increased impedance, severely restricting popularization and application of low-cobalt and cobalt-free layered cathode materials. Therefore, a technical problem to be solved by the present disclosure is how to eliminate the adverse effects of cobalt reduction on the structure and performance of the cathode material, so as to enable the material to deliver high energy density and maintain good structural stability during electrochemical cycling.

In view of this, in an aspect of the present disclosure, the present disclosure provides a cathode active material. According to an embodiment of the present disclosure, the above-mentioned cathode active material has a specific structure. In an XRD pattern of the cathode active material: a characteristic peak C (018) corresponding to (018) crystal plane of the cathode active material has a double-peak profile including a first characteristic peak C¹ (018) located on a low-angle side and a second characteristic peak C² (018) located on a high-angle side; and a characteristic peak D (110) corresponding to (110) crystal plane of the cathode active material has a double-peak profile including a first characteristic peak D¹ (110) on a low-angle side and a second characteristic peak D² (110) on a high-angle side. An intensity ratio of the diffraction peaks measured by XRD satisfies the following relationship: 0.80≤I_{D1}/I_{C1}≤1.00, in which I_{C1} represents an intensity of the first characteristic peak C¹ (018) corresponding to the (018) crystal plane of the cathode active material, and I_{D1} represents an intensity of the first characteristic peak D¹ (110) corresponding to the (110) crystal plane of the cathode active material. Due to the high activity of the (110) crystal plane of the cathode active material, excessive exposure of the (110) crystal plane tends to cause irreversible phase transitions of the cathode material during cycling, transforming from a layered structure to a spinel phase (space group: Fd-3m), and further to a rock salt phase (space: group Fm-3m), thereby deteriorating the cycling stability of the battery. In the present disclosure, by controlling 0.80≤I_{D1}/I_{C1}≤1.00 within the above-mentioned range, the exposure of the active crystal planes can be appropriately reduced, thereby effectively suppressing side reactions between the cathode material and the electrolyte as well as surface phase transitions, and consequently improving the cycling stability of the cathode material under high voltage. Preferably, 0.85≤I_{D1}/I_{C1}≤0.95 is satisfied. The present disclosure effectively improves the structural stability and interfacial stability of the cathode active material, and also effectively reduces the degree of Li/Ni cation mixing of the cathode material, thereby effectively improving the cycling performance, initial charge/discharge efficiency, discharge capacity, and safety performance of the battery, while also effectively reducing the initial impedance and impedance increase of the battery.

According to some specific embodiments of the present disclosure, the cathode active material satisfies 0.35°≤S_{D1}-S_{C1}≤0.65°, in which: S_{C1} represents a value of 2θ of the first characteristic peak C¹ (018) corresponding to the (018) crystal plane of the cathode active material, and S_{D1} represents a value of 2θ of the first characteristic peak D¹ (110) corresponding to the (110) crystal plane of the cathode active material. A greater splitting degree between the diffraction peak C (018) corresponding to the (018) crystal plane and the characteristic peak D (110) corresponding to the (018) crystal plane indicates a more pronounced layered characteristic and a lower degree of Li/Ni cation mixing. In the present disclosure, by controlling the splitting degree of the characteristic peak C (018) and the characteristic peak D (110) within the range of 0.35°≤S_{D1}-S_{C1}≤0.65°, a layered cathode material with a high capacity and excellent cycling performance can be obtained. Preferably, 0.40°≤S_{D1}-S_{C1}≤0.60° is satisfied.

According to further specific embodiments of the present disclosure, the cathode active material satisfies 0.80≤A_{D1}/A_{C1}≤1.05, in which: A_{C1} represents a peak area of the first characteristic peak C¹ (018) corresponding to the (018) crystal plane of the cathode active material, and A_{D1} represents a peak area of the first characteristic peak D¹ (110) corresponding to the (110) crystal plane of the cathode active material. Due to the high activity of the (110) crystal plane of the cathode active material, excessive exposure of the (110) crystal plane tends to cause irreversible phase transitions of the cathode material during cycling, transforming from a layered structure to a spinel phase (space group: Fd-3m), and further to a rock salt phase (space: group Fm-3m), thereby deteriorating the cycling stability of the battery. In the present disclosure, by controlling 0.80≤A_{D1}/A_{C1}≤1.05 within the above-mentioned range, the exposure of the active crystal planes can be further reduced, thereby further effectively suppressing side reactions between the cathode material and the electrolyte as well as surface phase transitions, and consequently further improving the cycling stability of the cathode material under high voltage. Preferably, 0.85≤A_{D1}/A_{C1}≤1.00 is satisfied.

According to yet further specific embodiments of the present disclosure, the cathode active material satisfies 1.77≤I_{C1}/I_{C2}≤1.98 and 1.78≤I_{D1}/I_{D2}≤2.19, in which: I_{C2} represents an intensity of a second characteristic peak C² (018) corresponding to the (018) crystal plane of the cathode active material, and I_{D2} represents an intensity of a second characteristic peak D² (110) corresponding to the (110) crystal plane of the cathode active material. The second characteristic peaks C² (018) and D² (110) originate from diffraction peaks caused by multiphases. If the proportions of C² (018) and D² (110) are excessively high, the resulting battery would exhibit reduced capacity, initial efficiency, and cycling performance. Conversely, if the proportions of C² (018) and D² (110) are excessively low, the cathode active material would exhibit poor crystallinity, which also leads to deteriorated performance of the resulting battery, such as cycling performance and direct current resistance (DCR) increase. The inventors have found that by setting the intensity ratio of the first characteristic peak C¹ (018) to the second characteristic peak C² (018) and the intensity ratio of the first characteristic peak D¹ (110) to the second characteristic peak D² (110) within the specified range, the cathode active material exhibits favorable battery performance. Preferably, 1.80≤I_{C1}/I_{C2}≤1.95 and 1.80≤I_{D1}/I_{D2}≤2.00 are satisfied.

According to still further specific embodiments of the present disclosure, the cathode active material satisfies 0°<F_{C1}≤0.20° and 0°<F_{D1}≤0.20°, in which: F_{C1} represents a full width at half maximum of the first characteristic peak C¹ (018) corresponding to the (018) crystal plane of the cathode active material, and F_{D1} represents a full width at half maximum of the first characteristic peak D¹ (110) corresponding to the (110) crystal plane of the cathode active material. A smaller grain size corresponds to a larger full width at half maximum of the diffraction peak. In the present disclosure, by defining 0°<F_{C1}≤0.20° and 0°<F_{D1}≤0.20°, randomly oriented grain boundaries can be effectively eliminated, the contact area between the cathode material and the electrolyte can be reduced, and a relatively high mechanical strength can be achieved. As a result, the generation of microcracks in the particles as well as detrimental surface phase transitions/side reactions can be effectively suppressed, thereby advantageously improving the cycling stability of the battery. Preferably, 0.05°≤F_{C1}≤0.15° and 0.05°≤F_{D1}≤0.15° are satisfied.

"Full width at half maximum (FWHM)" refers to the linear distance between two points on either side of a peak at half of the peak. "Half of the peak" refers to half of the peak intensity. "Peak" refers to the apex or highest intensity point of the peak.

According to some specific embodiments of the present disclosure, the above-mentioned cathode active material has a chemical formula of Liₐ(NiₓCo_{y}Mn_{z}M_{b}R_{c})O₂, where: 0.95≤a≤1.10 (as an example, a may be 0.95/1.00/1.05/1.10, etc.), 0.50≤x≤0.95 (as an example, x may be 0.50/0.60/0.70/0.80/0.90/0.95, etc.), 0≤y≤0.05 (as an example, y may be 0/0.01/0.02/0.03/0.04/0.05), 0≤z≤0.45 (as an example, z may be 0/0.05/0.10/0.20/0.30/0.40/0.45), 0≤b≤0.05 (as an example, b may be 0/0.01/0.02/0.03/0.04/0.05), 0≤c≤0.03 (as an example, c may be 0/0.01/0.02/0.03), and at least one of b and c is not 0; and M and R are each independently selected from B, Mg, Sr, Ba, Fe, Cu, Ni, Co, Mn, Sc, Y, La, Ce, Sm, Eu, Gd, Tb, Dy, Yb, Lu, Ti, Zr, Hf, V, Nb, Ta, Cr, Mo, W, Ru, Rh, Ir, Zn, Al, Ga, In, Si, Pb, Cd, Ge, Sn, Sb, Bi, or Te. Therefore, the above-mentioned cathode active material includes the doping elements M and R, thereby obtaining a structurally stable substrate material that has both bulk doping and surface doping. As a result, the structural stability and interfacial stability of the cathode active material can be effectively improved, and the degree of Li/Ni cation mixing of the cathode material can also be reduced, thereby effectively improving the cycling performance, discharge capacity, and safety performance of the battery.

According to some preferred embodiments of the present disclosure, 1.00≤a≤1.05, 0.60≤x≤0.80, 0≤y≤0.03, 0.05≤z≤0.30, 0.01≤b≤0.03, 0≤c≤0.02, x+y+z+b+c=1.

According to further preferred embodiments of the present disclosure, M and R are different. M is selected from at least one of B, Mg, Fe, Cu, Ni, Co, Mn, Sc, Ti, Zr, Cr, Zn, Al, Ga, In, Si, Pb, Ge, Sn, or Sb, preferably at least one of B, Mg, Ti, Zr, Zn, Al, or Si. R is selected from at least one of Sr, Ba, Y, La, Ce, Sm, Eu, Gd, Tb, Dy, Yb, Lu, Hf, V, Nb, Ta, Mo, W, Ru, Rh, Ir, Cd, Bi, or Te, preferably at least one of Sr, Ba, Y, La, Al, Nb, Ta, Mo, or W. The doping elements M and R of the above-mentioned types can further effectively improve the structural stability and interfacial stability of the cathode active material while further reducing the degree of Li/Ni cation mixing of the cathode material, thereby further effectively improving the cycling performance, discharge capacity, and safety performance of the battery.

According to yet further specific embodiments of the present disclosure, the cathode active material includes a substrate material and a coating layer. The coating layer is disposed on at least a portion of a surface of the substrate material. As such, the coating layer is disposed on the surface of the substrate material to modify the surface and interface of the substrate material. On the one hand, the direct contact between the cathode active material and an electrolyte can be effectively isolated to reduce side reactions, thereby effectively improving the electrochemical performance and safety performance of the battery. On the other hand, the ionic and electronic conductivity of the cathode material can also be effectively improved, thereby effectively improving the initial charge/discharge efficiency, discharge capacity, and cycling performance of the battery, while reducing the initial impedance and impedance increase of the battery.

According to still further specific embodiments of the present disclosure, the coating layer includes a continuous coating layer and a coating protrusion protruding from a surface of the continuous coating layer, and the coating protrusion includes at least one of point-shaped coating and island-shaped coating. The continuous coating layer can effectively improve the ionic and electronic conductivity of the cathode material, thereby improving the discharge capacity and cycling performance of the battery while reducing its impedance. The discontinuous coating can effectively improve the stability of the cathode material, reduce the reactions between the cathode material and the electrolyte, and also effectively improve the ionic and electronic conductivity of the cathode material, thereby improving the charge/discharge performance of the battery.

It can be understood that the continuous coating layer refers to a coating layer having a smooth and continuous surface without distinct particles and point-shaped/island-shaped coating. The point-shaped/island-shaped coating refers to point-shaped and/or island-shaped coating that significantly protrudes from the surface of the coating layer.

According to yet further specific embodiments of the present disclosure, the continuous coating layer includes at least one of Al-containing lithium cobalt oxide, W-containing lithium cobalt oxide, Zr-containing lithium cobalt oxide, or B-containing lithium cobalt oxide. As a result, the above-mentioned continuous coating layer can further effectively improve the ionic and electronic conductivity of the cathode material, thereby further improving the discharge capacity and cycling performance of the battery, while further reducing the impedance of the battery.

According to still further specific embodiments of the present disclosure, the coating protrusion includes at least one of aluminum oxide, tungsten oxide, titanium oxide, boron oxide, strontium oxide, Al-containing lithium oxide, W-containing lithium oxide, Ti-containing lithium oxide, B-containing lithium oxide, or Sr-containing lithium oxide. As a result, the above-mentioned coating protrusion can further improve the stability of the cathode material, further reduce the reactions between the cathode material and the electrolyte, and also further effectively improve the ionic and electronic conductivity of the cathode material, thereby further improving the charge/discharge performance of the battery.

According to yet further specific embodiments of the present disclosure, the continuous coating layer has a thickness ranging from 0.1 µm to 0.5 µm. A height of the above-mentioned coating protrusion protruding from the surface of the coating layer ranges from 0.1 µm to 0.5 µm.

In a second aspect of the present disclosure, the present disclosure provides a method for preparing the above-mentioned cathode active material. According to an embodiment of the present disclosure, the method includes the following steps.

S100: Mixing a nickel-cobalt-manganese precursor, a first lithium source, and a first doping additive in a stoichiometric ratio, and performing a first sintering to obtain a first sintered product.

In this step, a nickel-cobalt-manganese precursor, a first lithium source, and a first doping additive are mixed in a stoichiometric ratio and subjected to a first sintering under an air/oxygen atmosphere, and the resulting product is crushed to obtain the first sintered product with bulk doping. The first sintered product is a compound containing lithium, nickel, cobalt, manganese, and a first doping element. The compound exists as relatively small crystal grains at this stage. By incorporating the first doping additive into the cathode active material, the structural stability of the cathode active material can be effectively improved, and the degree of Li/Ni cation mixing of the cathode material can be reduced, thereby effectively improving the cycling performance and capacity of the battery and suppressing gas generation.

In an embodiment of the present disclosure, the above-mentioned nickel-cobalt-manganese precursor is a solid solution of hydroxide containing nickel, cobalt, and manganese.

According to some specific embodiments of the present disclosure, the above-mentioned first doping additive is selected from at least one of an oxide containing doping element M or a hydroxide containing doping element M, in which M is selected from at least one of B, Mg, Sr, Ba, Fe, Cu, Ni, Co, Mn, Sc, Y, La, Ce, Sm, Eu, Gd, Tb, Dy, Yb, Lu, Ti, Zr, Hf, V, Nb, Ta, Cr, Mo, W, Ru, Rh, Ir, Zn, Al, Ga, In, Si, Pb, Cd, Ge, Sn, Sb, Bi, or Te. The first doping additive of the above-mentioned type can effectively improve the structural stability of the cathode active material, and can also reduce the degree of Li/Ni cation mixing in the cathode material.

According to further embodiments of the present disclosure, the first sintering includes a first heating stage and a first constant-temperature stage. A heating rate of the first heating stage ranges from 1°C/min to 15°C/min (as an example, it may be 1°C/min, 3°C/min, 5°C/min, 7°C/min, 10°C/min, 12°C/min, 15°C/min, etc.). As a result, both heating efficiency and full removal, from the reaction system, of impurity elements in the first lithium source and the first doping additive can be ensured.

According to yet further specific embodiments of the present disclosure, a temperature of the first constant-temperature stage ranges from 600°C to 1,000°C (as an example, it may be 600°C, 700°C, 800°C, 900°C, 1,000°C, etc.), and a duration of the first constant-temperature stage ranges from 2 hours to 20 hours (as an example, it may be 2 hours, 4 hours, 6 hours, 8 hours, 10 hours, 12 hours, 14 hours, 16 hours, 18 hours, 20 hours, etc.). As a result, a full reaction of the nickel-cobalt-manganese precursor, the first lithium source, and the first doping additive can be further ensured to form the first sintered product of bulk doping.

S200: Mixing the first sintered product with a second lithium source and an optional second doping additive in a stoichiometric ratio, and performing a second sintering to obtain a second sintered product.

In this step, the first sintered product, a second lithium source, and an optional second doping additive are mixed in a stoichiometric ratio and subjected to a second sintering under an air/oxygen atmosphere, and the resulting product is crushed to obtain a single crystal low-cobalt or cobalt-free substrate material (i.e., the second sintered product). In this step, the second doping element and the second lithium source are mainly doped on the surface layer of the material. By incorporating the second doping additive into the cathode active material, the interfacial stability of the cathode active material can be effectively improved, thereby improving the cycling performance of the battery and suppressing gas generation. Meanwhile, this step corresponds to a grain growth process, and the above-mentioned second sintered product grows into relatively large single crystals.

According to still further specific embodiments of the present disclosure, the second doping additive is selected from at least one of an oxide containing doping element R or a hydroxide containing doping element R, in which R is selected from at least one of B, Mg, Sr, Ba, Fe, Cu, Ni, Co, Mn, Sc, Y, La, Ce, Sm, Eu, Gd, Tb, Dy, Yb, Lu, Ti, Zr, Hf, V, Nb, Ta, Cr, Mo, W, Ru, Rh, Ir, Zn, Al, Ga, In, Si, Pb, Cd, Ge, Sn, Sb, Bi, or Te. The second doping additive of the above-mentioned type can further effectively improve the interfacial stability of the cathode active material, thereby improving the cycling performance of the battery and suppressing gas generation.

According to yet further specific embodiments of the present disclosure, the first lithium source includes lithium carbonate, and the second lithium source includes lithium hydroxide. In the present disclosure, the lithium source is added in batches in the two sintering treatments: lithium carbonate is added in the first sintering and lithium hydroxide is added in the second sintering. As a result, the formation of impurity phases can be prevented during preparation of a single-crystal substrate at a high temperature with an excessive lithium source. Meanwhile, the generation of microscopic stress can be reduced, enabling more sufficient single crystallization of the substrate material. Further, a molar ratio of the first lithium source to the second lithium source is (30 to 90):(10 to 70), which can further effectively promote single crystallization of the substrate material. Preferably, the molar ratio of the first lithium source to the second lithium source is (40 to 90):(10 to 60), more preferably (50 to 90):(20 to 60).

According to still further specific embodiments of the present disclosure, the second sintering includes a second heating stage, a third heating stage, and a second constant-temperature stage. A heating rate of the second heating stage is greater than a heating rate of the third heating stage, and a difference between the heating rate of the second heating stage and the heating rate of the third heating stage ranges from 1°C/min to 5°C/min. The heating rate of the second heating stage may range from 3°C/min to 10°C/min (as an example, it may be 3°C/min, 4°C/min, 5°C/min, 6°C/min, 7°C/min, 8°C/min, 9°C/min, 10°C/min, etc.). The heating rate of the third heating stage may range from 1°C/min to 5°C/min (as an example, it may be 1°C/min, 2°C/min, 3°C/min, 4°C/min, or 5°C/min). By limiting the heating rate of the second heating stage within the above-mentioned range, it is beneficial to ensure that impurity elements in the second lithium source and the second doping additive are fully removed from the reaction system. By limiting the heating rate of the third heating stage within the above-mentioned range, it is favorable for the growth of crystal grains in the cathode material.

According to yet further specific embodiments of the present disclosure, a temperature of the second constant-temperature stage ranges from 600°C to 1,200°C (as an example, it may be 600°C, 700°C, 800°C, 900°C, 1,000°C, 1,100°C, 1,200°C, etc.), and a duration of the second constant-temperature stage ranges from 2 hours to 24 hours (as an example, it may be 2 hours, 4 hours, 6 hours, 8 hours, 10 hours, 12 hours, 14 hours, 16 hours, 18 hours, 20 hours, 22 hours, 24 hours, etc.). As a result, a full reaction of the first sintered product, the second lithium source, and the second doping additive can be further ensured to form a structurally stable substrate material that has both bulk doping and surface doping.

S300: Mixing the second sintered product with a coating agent, and performing a third sintering to obtain the cathode active material.

According to some specific embodiments of the present disclosure, the above-mentioned step S300 includes the following steps.

S310: Mixing the second sintered product with a first coating agent, and performing a third sintering to obtain a third sintered product.

In this step, the second sintered product is mixed with A first coating agent and then subjected to A third sintering under an air/oxygen atmosphere to form a continuous coating layer on at least a portion of the surface of the substrate material, and the resulting product is crushed to obtain the third sintered product. By forming the continuous coating layer on the surface of the substrate material, the ionic and electronic conductivity of the cathode material can be effectively improved, thereby improving the discharge capacity and cycling performance of the battery while reducing the impedance of the battery.

According to still further specific embodiments of the present disclosure, the first coating agent is selected from at least one of an oxide, a hydroxide or a carbonate containing Al, W, Zr, or B, such as aluminum oxide, aluminum hydroxide, or aluminum carbonate. After sintering, the above-mentioned first coating agent forms a lithium cobalt oxide containing Al, W, Zr, or B.

According to yet further specific embodiments of the present disclosure, a mass of the first coating agent is 0.01% to 2% of a mass of the second sintered product. As an example, it may be 0.01%, 0.5%, 1%, 1.5%, 2%, etc. As a result, the ionic and electronic conductivity of the cathode material can be further effectively improved.

According to still further specific embodiments of the present disclosure, the third sintering includes a fourth heating stage and a third constant-temperature stage. A heating rate of the fourth heating stage ranges from 1°C/min to 15°C/min (as an example, it may be 1°C/min, 3°C/min, 5°C/min, 7°C/min, 10°C/min, 12°C/min, 15°C/min, etc.). As a result, both the heating efficiency and full removal, from the reaction system, of impurity elements in the first coating agent can be ensured.

According to yet further specific embodiments of the present disclosure, a temperature of the third constant-temperature stage ranges from 500°C to 1,000°C (as an example, it may be 500°C, 600°C, 700°C, 800°C, 900°C, 1,000°C, etc.), and a duration of the third constant-temperature stage ranges from 2 hours to 20 hours (as examples, it may be 2 hours, 4 hours, 6 hours, 8 hours, 10 hours, 12 hours, 14 hours, 16 hours, 18 hours, 20 hours, etc.). As a result, a full reaction of the first coating agent can be further ensured to form a continuous coating layer.

S320: Mixing the third sintered product with a second coating agent, and performing a fourth sintering to obtain the cathode active material.

In this step, the third sintered product is mixed with a second coating agent and then subjected to a fourth sintering under an air/oxygen atmosphere to form a discontinuous coating on a portion of the surface of the continuous coating layer. The coating protrusion protrudes from the surface of the continuous coating layer. The coating protrusion includes at least one of a point-shaped coating and an island-shaped coating. Finally, the resulting product is subjected to crushing, cooling, sieving, and magnetic removal to obtain the cathode active material. By forming the discontinuous coating on the surface of the continuous coating layer, the stability of the cathode material can be effectively improved, and the reactions between the cathode material and the electrolyte can be reduced. Meanwhile, the ionic and electronic conductivity of the cathode material can be effectively improved, thereby improving the charge/discharge performance of the battery.

According to still further specific embodiments of the present disclosure, the second coating agent is selected from at least one of an oxide, a hydroxide or a carbonate containing Al, W, Ti, B, or Sr, such as aluminum oxide, aluminum hydroxide, aluminum carbonate. After sintering, the above-mentioned second coating agent forms aluminum oxide or lithium oxide containing Al, W, Ti, B, or Sr.

According to yet further specific embodiments of the present disclosure, a mass of the second coating agent is 0.01% to 2% of a mass of the third sintered product. As an example, it may be 0.01%, 0.5%, 1%, 1.5%, 2%, etc. As a result, the stability of the cathode material can be further ensured, and the ionic and electronic conductivity of the cathode material can be further effectively improved.

According to still further specific embodiments of the present disclosure, the fourth sintering includes a fifth heating stage and a fourth constant-temperature stage. A heating rate of the fifth heating stage ranges from 1°C/min to 15°C/min (as an example, it may be 1°C/min, 3°C/min, 5°C/min, 7°C/min, 10°C/min, 12°C/min, 15°C/min, etc.). As a result, both heating efficiency and full removal, from the reaction system, of impurity elements in the second coating agent can be ensured.

A temperature of the fourth constant-temperature stage ranges from 200°C to 800°C (as an example, it may be 200°C, 300°C, 400°C, 500°C, 600°C, 700°C, 800°C, etc.), and a duration of the fourth constant-temperature stage ranges from 2 hours to 20 hours (as an example, it may be 2 hours, 4 hours, 6 hours, 8 hours, 10 hours, 12 hours, 14 hours, 16 hours, 18 hours, 20 hours, etc.). As a result, a full reaction of the second coating agent can be further ensured to form a discontinuous coating.

Therefore, in the present disclosure, the lithium source is added in batches in the two sintering treatments (that is, a first portion of the lithium source is added in the first sintering, and a second portion of the lithium source is added in the second sintering). As a result, the formation of impurity phases can be prevented during preparation of a single-crystal substrate at a high temperature with an excessive lithium source. Meanwhile, the generation of microscopic stress can be reduced, enabling more sufficient single crystallization of the substrate material. Furthermore, the doping additive is added in the two sintering treatments, so as to obtain a structurally stable substrate material that has both bulk doping and surface doping. The surface of the substrate material is further coated to modify the surface and interface of the substrate material. On the one hand, the direct contact between the cathode active material and an electrolyte can be effectively isolated to reduce side reactions, thereby effectively improving the electrochemical performance and safety performance of the battery. On the other hand, the ionic and electronic conductivity of the cathode material can also be effectively improved, thereby effectively improving the discharge capacity and cycling performance of the battery.

In a third aspect of the present disclosure, the present disclosure provides a cathode electrode plate. According to an embodiment of the present disclosure, the cathode electrode plate includes a cathode current collector and a cathode active material layer disposed on at least one surface of the cathode current collector. The cathode active material layer includes the cathode active material according to the first aspect of the present disclosure or the cathode active material prepared by the method according to the second aspect of the present disclosure.

According to an embodiment of the present disclosure, the cathode electrode plate includes a cathode current collector and a cathode active material layer disposed on the cathode current collector. The cathode active material layer includes the above-mentioned cathode active material. The cathode current collector may be a metallic foil or a composite current collector (the composite current collector may be formed by disposing a metallic material on a polymer substrate). For example, the cathode current collector may be an aluminum foil.

According to some embodiments of the present disclosure, the cathode active material layer may optionally further include a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, or a fluorine-containing acrylate resin.

According to some embodiments of the present disclosure, the cathode active material layer may optionally further include a conductive agent. As an example, the conductive agent may include at least one of superconducting carbon, acetylene black, carbon black, Ketjen black, carbon dots, carbon nanotubes, graphene, or carbon nanofibers.

According to some embodiments of the present disclosure, the cathode electrode plate may be prepared as follows. The above-mentioned components for preparing the cathode electrode plate, such as the cathode active material, the conductive agent, the binder, and any other optional components, are dispersed in a solvent (e.g., N-methylpyrrolidone) to form a cathode slurry; the cathode slurry is coated onto the positive current collector, followed by processes such as drying and cold calendering, and the cathode electrode plate can thus be obtained.

It should be noted that the features and advantages described above for the cathode active material and the preparation method thereof are also applicable to the cathode electrode plate, and are not repeated herein.

In a fourth aspect of the present disclosure, the present disclosure provides a battery. According to an embodiment of the present disclosure, the battery includes at least the cathode electrode plate according to the third aspect of the present disclosure. As a result, the initial charge/discharge efficiency, discharge capacity, cycling performance, and safety performance of the battery can be effectively improved, while the initial impedance and impedance increase of the battery can be reduced.

As an example, the battery includes a cathode electrode plate, an anode electrode plate, an electrolyte, and a separator. The separator is located between the cathode electrode plate and the anode electrode plate. During charging and discharging of the battery, active ions are reversibly intercalated into and deintercalated from the cathode electrode plate and the anode electrode plate. The electrolyte functions to conduct ions between the cathode electrode plate and the anode electrode plate. The separator, disposed between the cathode electrode plate and the anode electrode plate, mainly serves to prevent a short circuit between the cathode and anode, while allowing ions to pass through.

According to an embodiment of the present disclosure, the anode electrode plate includes an anode current collector and an anode active material layer disposed on the anode current collector. The anode active material layer includes an anode active material. The anode current collector may be a metallic foil or a composite current collector (the composite current collector may be formed by disposing a metallic material on a polymer substrate). For example, the anode current collector may be a copper foil.

According to some embodiments of the present disclosure, the anode active material may include at least one of artificial graphite, natural graphite, soft carbon, hard carbon, silicon-based materials, tin-based materials, and sodium titanate.

According to some embodiments of the present disclosure, the anode active material layer may optionally further include a conductive agent. The conductive agent may include at least one of superconducting carbon, acetylene black, carbon black, Ketjen black, carbon dots, carbon nanotubes, graphene, or carbon nanofibers.

According to some embodiments of the present disclosure, the anode active material layer may optionally further include other additives, such as a thickener (e.g., carboxymethylcellulose sodium (CMC-Na)).

According to some embodiments of the present disclosure, the anode electrode plate may be prepared as follows. The above-mentioned components for preparing the anode electrode plate, such as the anode active material, the conductive agent, and the binder, are dispersed in a solvent (such as deionized water) to form an anode slurry; the anode slurry is coated on the anode current collector, followed by process such as drying and cold calendering, and the anode electrode plate can thus be obtained.

According to further embodiments of the present disclosure, the anode electrode plate may include a sodium metallic plate, or a sodium alloy such as a sodium-indium alloy.

According to yet further embodiments of the present disclosure, the separator is not particularly limited and may be any known porous separator having excellent chemical stability and mechanical stability. As an example, the material of the separator may include at least one of glass fiber, non-woven fabric, polyethylene, polypropylene, or polyvinylidene fluoride. The separator may be a single-layer film or a multi-layer composite film, without particular limitation. In the case of a multi-layer composite film, the materials of the respective layers may be the same or different, without particular limitation.

According to still further embodiments of the present disclosure, the electrolyte is not specifically limited and may be selected as required. According to some embodiments of the present disclosure, the electrolyte is an electrolytic solution including a lithium salt and a solvent.

According to some embodiments of the present disclosure, the lithium salt may include lithium hexafluorophosphate (LiPF₆), lithium tetrafluoroborate (LiBF₄), lithium bis(fluorosulfonyl)imide (LiFSI), lithium bis(oxalate)borate (LiBOB), or lithium difluorophosphate (LiPO₂F₂).

According to some embodiments of the present disclosure, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, γ-butyrolactone, sulfolane, dimethyl sulfone, ethylene glycol dimethyl ether, methyl ethyl sulfone, or diethyl sulfone.

In some embodiments of the present disclosure, the electrolytic solution may optionally further include an additive. For example, the additive may include an anode film-forming additive and a cathode film-forming additive, and it may further include an additive capable of improving certain performance of the battery, such as an additive for improving overcharge performance of the battery and an additive for improving high-temperature or low-temperature performance of the battery.

It should be noted that the features and advantages described above for the cathode electrode plate are also applicable to a solid-state battery, and are not repeated herein.

In a fifth aspect of the present disclosure, the present disclosure provides an electrical device. According to an embodiment of the present disclosure, the electrical device includes the above-mentioned battery. The features and advantages described above for the battery are also applicable to the electrical device, and are not repeated herein.

Specifically, the above-mentioned electrical device may be, but is not limited to, a mobile phone, a tablet, a laptop computer, an electric toy, an electric tool, an electric bicycle, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

Hereinafter, examples of the present disclosure will be described. The examples described below are exemplary only and intended to explain, rather than limiting, the present disclosure. When specific techniques or conditions are not specified in the embodiments, they are carried out according to techniques or conditions described in the literature in the art or a product manual. Reagents and instruments used without specifying the manufacturer are all conventional and commercially available products.

### Example 1

(1) Lithium carbonate, a nickel-cobalt-manganese precursor, and zirconium oxide were uniformly mixed in a high-speed mixer at a molar ratio of n(Li):n(Ni):n(Co):n(Mn):n(Zr)=0.52:0.763:0.015:0.219:0.003 to obtain a mixture I.
(2) The mixture I was heated to 875°C at a rate of 5.5°C/min under an air atmosphere, held for 8.5 hours, and naturally cooled to room temperature. The product was crushed by a colloid mill to obtain an intermediate product I having a D50 of 4.2 µm.
(3) The intermediate product I and lithium hydroxide were uniformly mixed in a high-speed mixer at a molar ratio of n(Li_{0.52}Ni_{0.763}Co_{0.015}Mn_{0.219}Zr_{0.003}): n(Li)=1:0.52 to obtain a mixture II.
(4) The mixture II was subjected to a second sintering under an oxygen atmosphere, heated to 650°C at a rate of 4.5°C/min and then to 920°C at a rate of 2.5°C/min, held for 8 hours, and naturally cooled to room temperature. The product was crushed to obtain an intermediate product II.
(5) The intermediate product II, aluminum oxide, and cobalt oxyhydroxide were uniformly mixed in a high-speed mixer at a mass ratio of 100:0.19:0.76 to obtain a mixture III.
(6) The mixture III was subjected to a third sintering under an air atmosphere, heated to 750°C at a rate of 3°C/min, held for 8 hours, and naturally cooled to room temperature. The resulting product was crushed to obtain an intermediate product III.
(7) The intermediate product III, aluminum oxide, tungsten oxide, and titanium oxide were uniformly mixed in a high-speed mixer at a mass ratio of 100:0.28:0.25:0.30 to obtain a mixture IV.
(8) The mixture IV was subjected to a fourth sintering under an air atmosphere, heated to 410°C at a rate of 3°C/min, held for 8 hours, and naturally cooled to room temperature. The resulting product was crushed and sieved through a 400-mesh sieve to obtain a low-cobalt layered cathode material A1 having a composition of Li_{1.04}Ni_{0.747}Co_{0.023}Mn_{0.214}Zr_{0.003}Al_{0.009}W_{0.001}Ti_{0.003}O₂.

### Example 2

(1) Lithium carbonate, a nickel-cobalt-manganese precursor, zirconium oxide, and aluminum oxide were uniformly mixed in a high-speed mixer at a molar ratio of n(Li):n(Ni):n(Co):n(Mn):n(Zr):n(Al)=0.78:0.761:0.015:0.219:0.002:0.003 to obtain a mixture I.
(2) The mixture I was heated to 895°C at a rate of 5.5°C/min under an oxygen atmosphere, held for 8.5 hours, and naturally cooled to room temperature. The product was crushed by a colloid mill to obtain an intermediate product I having a D50 of 4.5 µm.
(3) The intermediate product I was mixed with lithium hydroxide uniformly in a high-speed mixer at a molar ratio of n(Li_{0.78}Ni_{0.761}Co_{0.015}Mn_{0.219}Zr_{0.002}Al_{0.003}O₂): n(Li)=1:0.26 to obtain a mixture II.
(4) The mixture II was subjected to a second sintering under an oxygen atmosphere, heated to 650°C at a rate of 4.5°C/min and then to 900°C at a rate of 2.5°C/min, held for 8 hours, and naturally cooled to room temperature. The product was crushed to obtain an intermediate product II.
(5) The intermediate product II, aluminum oxide, and cobalt oxyhydroxide were uniformly mixed in a high-speed mixer at a mass ratio of 100:0.19:0.76 to obtain a mixture III.
(6) The mixture III was subjected to a third sintering under an air atmosphere, heated to 750°C at 3°C/min, held for 8 hours, and naturally cooled to room temperature. The resulting product was crushed to obtain an intermediate product III.
(7) The intermediate product III, aluminum oxide, tungsten oxide, and titanium oxide were uniformly mixed in a high-speed mixer at a mass ratio of 100:0.28:0.25:0.30 to obtain a mixture IV.
(8) The mixture IV was subjected to a fourth sintering under an air atmosphere, heated to 410°C at a rate of 3°C/min, held for 8 hours, and naturally cooled to room temperature. The resulting product was crushed and sieved through a 400-mesh sieve to obtain a low-cobalt layered cathode material A2 having a composition of Li_{1.04}Ni_{0.745}Co_{0.023}Mn_{0.214}Zr_{0.002}Al_{0.012}W_{0.001}Ti_{0.003}O₂.

### Example 3

(1) Lithium carbonate, a nickel-cobalt-manganese precursor, zirconium oxide, and aluminum oxide were uniformly mixed in a high-speed mixer at a molar ratio of n(Li):n(Ni):n(Co):n(Mn):n(Zr):n(Al)=0.78:0.761:0.015:0.219:0.002:0.003 to obtain a mixture I.
(2) The mixture I was heated to 895°C at a rate of 5.5°C/min under an oxygen atmosphere, held for 8.5 hours, and naturally cooled to room temperature. The product was crushed by a colloid mill to obtain an intermediate product I having a D50 of 4.5 µm.
(3) The intermediate product I, lithium hydroxide, and yttrium oxide were uniformly mixed in a high-speed mixer at a molar ratio of n(Li_{0.78}Ni_{0.761}Co_{0.015}Mn_{0.219}Zr_{0.002}Al_{0.003}O₂): n(Li): n(Y)=1:0.26:0.002 to obtain a mixture II.
(4) The mixture II was subjected to a second sintering under an oxygen atmosphere, heated to 650°C at a rate of 4.5°C/min and then to 900°C at a rate of 2.5°C/min, held for 8 hours, and naturally cooled to room temperature. The product was crushed to obtain an intermediate product II.
(5) The intermediate product II, aluminum oxide, and cobalt oxyhydroxide were uniformly mixed in a high-speed mixer at a mass ratio of 100:0.19:0.76 to obtain a mixture III.
(6) The mixture III was subjected to a third sintering under an air atmosphere, heated to 750°C at 3°C/min, held for 8 hours, and naturally cooled to room temperature. The resulting product was crushed to obtain an intermediate product III.
(7) The intermediate product III, aluminum oxide, tungsten oxide, and titanium oxide were uniformly mixed in a high-speed mixer at a mass ratio of 100:0.28:0.25:0.30 to obtain a mixture IV.
(8) The mixture IV was subjected to a fourth sintering under an air atmosphere, heated to 410°C at 3°C/min, held for 8 hours, and naturally cooled to room temperature. The resulting product was crushed and sieved through a 400-mesh sieve to obtain a low-cobalt layered cathode material A3 having a composition of Li_{1.04}Ni_{0.744}Co_{0.022}Mn_{0.214}Zr_{0.002}Y_{0.002}Al_{0.012}W_{0.001}Ti_{0.003}O₂.

### Example 4

(1) Lithium carbonate, a nickel-cobalt-manganese precursor, zirconium oxide, and aluminum oxide were uniformly mixed in a high-speed mixer at a molar ratio of n(Li):n(Ni):n(Co):n(Mn):n(Zr):n(Al)=0.78:0.761:0.015:0.219:0.002:0.003 to obtain a mixture I.
(2) The mixture I was heated to 895°C at a rate of 5.5°C/min under an oxygen atmosphere, held for 8.5 hours, and naturally cooled to room temperature. The product was crushed by a colloid mill to obtain an intermediate product I having a D50 of 4.5 µm.
(3) The intermediate product I, lithium hydroxide, and yttrium oxide were uniformly mixed in a high-speed mixer at a molar ratio of n(Li_{0.78}Ni_{0.761}Co_{0.015}Mn_{0.219}Zr_{0.002}Al_{0.003}O₂): n(Li): n(Y)=1:0.26: 0.002 to obtain a mixture II.
(4) The mixture II was subjected to a second sintering under an oxygen atmosphere, heated to 650°C at a rate of 4.5°C/min and then to 900°C at a rate of 2.5°C/min, held for 8 hours, and naturally cooled to room temperature. The product was crushed to obtain an intermediate product II.
(5) The intermediate product II, aluminum oxide, tungsten oxide, and titanium oxide were uniformly mixed in a high-speed mixer at a mass ratio of 100:0.28:0.25:0.30 to obtain a mixture III.
(6) The mixture III was subjected to a third sintering under an air atmosphere, heated to 410°C at a ratio of 3°C/min, held for 8 hours, and naturally cooled to room temperature. The resulting product was crushed and sieved through a 400-mesh sieve to obtain a low-cobalt layered cathode material A4 having a composition of Li_{1.04}Ni_{0.753}Co_{0.015}Mn_{0.216}Zr_{0.002}Y_{0.002}Al_{0.008}W_{0.001}Ti_{0.003}O₂.

### Example 5

(1) Lithium carbonate, a nickel-cobalt-manganese precursor, zirconium oxide, aluminum oxide, and boron oxide were uniformly mixed in a high-speed mixer at a molar ratio of n(Li):n(Ni):n(Co):n(Mn):n(Zr):n(Al):n (B)=0.832:0.757:0.015:0.218:0.002:0.003:0.005 to obtain a mixture I.
(2) The mixture I was heated to 895°C at a ratio of 5.5°C/min under an oxygen atmosphere, held for 8.5 hours, and naturally cooled to room temperature. The product was crushed by a colloid mill to obtain an intermediate product I having a D50 of 4.5 µm.
(3) The intermediate product I, lithium hydroxide, and yttrium oxide were uniformly mixed in a high-speed mixer at a molar ratio of n(Li_{0.832}Ni_{0.757}Co_{0.015}Mn_{0.218}Zr_{0.002}Al_{0.003}B_{0.005}O₂): n(Li): n(Y)=1:0.208:0.002 to obtain a mixture II.
(4) The mixture II was subjected to a second sintering under an oxygen atmosphere, heated to 650°C at a rate of 4.5°C/min and then to 900°C at a rate of 2.5°C/min, held for 8 hours, and naturally cooled to room temperature. The product was crushed to obtain an intermediate product II.
(5) The intermediate product II, aluminum oxide, and cobalt oxyhydroxide were uniformly mixed in a high-speed mixer at a mass ratio of 100:0.19:0.76 to obtain a mixture III.
(6) The mixture III was subjected to a third sintering under an air atmosphere, heated to 750°C at a rate of 3°C/min, held for 8 hours, and naturally cooled to room temperature. The resulting product was crushed to obtain an intermediate product III.
(7) The intermediate product III, aluminum oxide, tungsten oxide, and titanium oxide were uniformly mixed in a high-speed mixer at a mass ratio of 100:0.28:0.25:0.30 to obtain a mixture IV.
(8) The mixture IV was subjected to a fourth sintering under an air atmosphere, heated to 410°C at a rate of 3°C/min, held for 8 hours, and naturally cooled to room temperature. The resulting product was crushed and sieved through a 400-mesh sieve to obtain a low-cobalt layered cathode material A5 having a composition of Li_{1.04}Ni_{0.740}Co_{0.022}Mn_{0.213}Zr_{0.002}Y_{0.002}B_{0.005}Al_{0.012}W_{0.001}Ti_{0.003}O₂.

### Example 6

(1) Lithium carbonate, a nickel-cobalt-manganese precursor, titanium oxide, and aluminum oxide were uniformly in a high-speed mixer at a molar ratio of n(Li):n(Ni):n(Co):n(Mn):n(Ti):n(Al)=0.78:0.745:0:0.249:0.002:0.004 to obtain a mixture I.
(2) The mixture I was heated to 895°C at a rate of 5.5°C/min under an oxygen atmosphere, held for 8.5 hours, and naturally cooled to room temperature. The product was crushed by a colloid mill to obtain an intermediate product I having a D50 of 4.5 µm.
(3) The intermediate product I, lithium hydroxide, zirconium oxide, and yttrium oxide were uniformly mixed in a high-speed mixer at a molar ratio of n(Li_{0.78}Ni_{0.745}Mn_{0.249}Ti_{0.002}Al_{0.004}O₂): n(Li): n(Zr): n(Y)=1:0.26:0.002:0.002 to obtain a mixture II.
(4) The mixture II was subjected to a second sintering under an oxygen atmosphere, heated to 650°C at a rate of 4.5°C/min and then to 910°C at 2.5°C/min, held for 8 hours, and naturally cooled to room temperature. The product was crushed to obtain an intermediate product II.
(5) The intermediate product II, aluminum oxide, and cobalt oxyhydroxide were uniformly mixed in a high-speed mixer at a mass ratio of 100:0.19:1.9 to obtain a mixture III.
(6) The mixture III was subjected to a third sintering under an air atmosphere, heated to 750°C at a rate of 3°C/min, held for 8 hours, and naturally cooled to room temperature. The resulting product was crushed to obtain an intermediate product III.
(7) The intermediate product III, aluminum oxide, tungsten oxide, and titanium oxide were uniformly mixed in a high-speed mixer at a mass ratio of 100:0.28:0.25:0.30 to obtain a mixture IV.
(8) The mixture IV was subjected to a fourth sintering under an air atmosphere, heated to 410°C at a rate of 3°C/min, held for 8 hours, and naturally cooled to room temperature. The resulting product was crushed and sieved through a 400-mesh sieve to obtain a low-cobalt layered cathode material A6 having a composition of Li_{1.04}Ni_{0.718}Co_{0.020}Mn_{0.239}Zr_{0.002}Y_{0.002}Al_{0.013}W_{0.001}Ti_{0.005}O₂.

### Example 7

(1) Lithium carbonate, a nickel-cobalt-manganese precursor, titanium oxide, and aluminum oxide were uniformly mixed in a high-speed mixer at a molar ratio of n(Li):n(Ni):n(Co):n(Mn):n(Ti):n(Al)=0.78:0.800:0.005:0.189:0.002:0.004 to obtain a mixture I.
(2) The mixture I was heated to 895°C at a rate of 5.5°C/min under an oxygen atmosphere, held for 8.5 hours, and naturally cooled to room temperature. The product was crushed by a colloid mill to obtain an intermediate product I having a D50 of 4.5 µm.
(3) The intermediate product I, lithium hydroxide, zirconium oxide, and yttrium oxide were uniformly mixed in a high-speed mixer at a molar ratio of n(Li_{0.78}Ni_{0.800}Co_{0.005}Mn_{0.189}Ti_{0.002}Al_{0.004}O₂): n(Li): n(Zr): n(Y)=1:0.26:0.002:0.002 to obtain a mixture II.
(4) The mixture II was subjected to a second sintering under an oxygen atmosphere, heated to 650°C at a rate of 4.5°C/min and then to 900°C at a rate of 2.5°C/min, held for 8 hours, and naturally cooled to room temperature. The product was crushed to obtain an intermediate product II.
(5) The intermediate product II, aluminum oxide, and cobalt oxyhydroxide were uniformly mixed in a high-speed mixer at a mass ratio of 100:0.19:1.42 to obtain a mixture III.
(6) The mixture III was subjected to a third sintering under an air atmosphere, heated to 750°C at 3°C/min, held for 8 hours, and naturally cooled to room temperature. The resulting product was crushed to obtain an intermediate product III.
(7) The intermediate product III, aluminum oxide, tungsten oxide, and titanium oxide were uniformly mixed in a high-speed mixer at a mass ratio of 100:0.28:0.25:0.30 to obtain a mixture IV.
(8) The mixture IV was subjected to a fourth sintering under an air atmosphere, heated to 410°C at a rate of 3°C/min, held for 8 hours, and naturally cooled to room temperature. The resulting product was crushed and sieved through a 400-mesh sieve to obtain a low-cobalt layered cathode material A7 having a composition of Li_{1.04}Ni_{0.775}Co_{0.019}Mn_{0.183}Zr_{0.002}Y_{0.002}Al_{0.013}W_{0.001}Ti_{0.005}O₂.

### Example 8

The preparation method in this example was essentially the same as that in Example 5, with the only difference being that:
(1) Zirconium oxide was replaced with magnesium oxide to obtain a low-cobalt layered cathode material A8 having a composition of Li_{1.04}Ni_{0.740}Co_{0.022}Mn_{0.213}Mg_{0.002}Y_{0.002}B_{0.005}Al_{0.012}W_{0.001}Ti_{0.003}O₂.

### Example 9

The preparation method in this example was essentially the same as that in Example 5, with the only difference being that:
(1) Zirconium oxide was replaced with silicon oxide to obtain a low-cobalt layered cathode material A9 having a composition of Li_{1.04}Ni_{0.740}Co_{0.022}Mn_{0.213}Si_{0.002}Y_{0.002}B_{0.005}Al_{0.012}W_{0.001}Ti_{0.003}O₂.

### Example 10

The preparation method in this example was essentially the same as that in Example 5, with the only difference being that:
(3) Yttrium oxide was replaced with tantalum oxide to obtain a low-cobalt layered cathode material A10 having a composition of Li_{1.04}Ni_{0.740}Co_{0.022}Mn_{0.213}Zr_{0.002}Ta_{0.002}B_{0.005}Al_{0.012}W_{0.001}Ti_{0.003}O₂.

### Example 11

The preparation method in this example was essentially the same as that in Example 5, with the only difference being that:
(3) Yttrium oxide was replaced with tungsten oxide to obtain a low-cobalt layered cathode material A11 having a composition of Li_{1.04}Ni_{0.740}Co_{0.022}Mn_{0.213}Zr_{0.002}B_{0.005}Al_{0.012}W_{0.003}Ti_{0.003}O₂.

### Comparative Example 1

(1) Lithium carbonate, a nickel-cobalt-manganese precursor, zirconium oxide, and aluminum oxide were uniformly mixed in a high-speed mixer at a molar ratio of n(Li):n(Ni):n(Co):n(Mn):n(Zr)=1.04:0.763:0.015:0.219:0.003: to obtain a mixture I.
(2) The mixture I was heated to 650°C at a rate of 4.5°C/min and then to 940°C at a rate of 2.5°C/min under an oxygen atmosphere, held for 8 hours, and naturally cooled to room temperature. The product was crushed to obtain an intermediate product I.
(3) The intermediate product I, aluminum oxide, and cobalt oxyhydroxide were uniformly mixed in a high-speed mixer at a mass ratio of 100:0.19:0.76 to obtain a mixture II.
(4) The mixture II was subjected to a second sintering under an air atmosphere, heated to 750°C at a rate of 3°C/min, held for 8 hours, and naturally cooled to room temperature. The resulting product was crushed to obtain an intermediate product II.
(5) The intermediate product II, aluminum oxide, tungsten oxide, and titanium oxide were uniformly mixed in a high-speed mixer at a mass ratio of 100:0.28:0.25:0.30 to obtain a mixture III.
(6) The mixture III was subjected to a third sintering under an air atmosphere, heated to 410°C at a rate of 3°C/min, held for 8 hours, and naturally cooled to room temperature. The resulting product was crushed and sieved through a 400-mesh sieve to obtain a low-cobalt layered cathode material D1 having a composition of Li_{1.04}Ni_{0.747}Co_{0.023}Mn_{0.214}Zr_{0.003}Al_{0.009}W_{0.001}Ti_{0.003}O₂. The specific data parameters are shown in Table 1 and Table 2.

### Comparative Example 2

(1) Comparative Example was carried out according to the method of Comparative Example 1, with the following differences: the lithium source used in mixture I was lithium hydroxide, and the holding temperature of the constant-temperature stage I during the first sintering was T1=910°C. The other conditions were the same. The low-cobalt layered cathode material D2 having a composition of Li_{1.04}Ni_{0.747}Co_{0.023}Mn_{0.214}Zr_{0.003}Al_{0.009}W_{0.001}Ti_{0.003}O₂ was obtained. The specific data parameters are shown in Table 1 and Table 2.

### Comparative Example 3

(1) Lithium carbonate, lithium hydroxide, a nickel-cobalt-manganese precursor, zirconium oxide, and aluminum oxide were uniformly mixed in a high-speed mixer at a molar ratio of n(Li₂CO₃):n(LiOH):n(Ni):n(Co):n(Mn):n(Zr)=0.26:0.52:0.763:0.015:0.219:0.003: to obtain a mixture I.
(2) The mixture I was heated to 650°C at a rate of 4.5°C/min and then to 900°C at a rate of 2.5°C/min under an oxygen atmosphere, held for 8 hours, and naturally cooled to room temperature. The product was crushed to obtain an intermediate product I.
(3) The intermediate product I, aluminum oxide, and cobalt oxyhydroxide were uniformly mixed in a high-speed mixer at a mass ratio of 100:0.19:0.76 to obtain a mixture II.
(4) The mixture II was subjected to a second sintering under an air atmosphere, heated to 750°C at a rate of 3°C/min, held for 8 hours, and naturally cooled to room temperature. The resulting product was crushed to obtain an intermediate product II.
(5) The intermediate product II, aluminum oxide, tungsten oxide, and titanium oxide were uniformly mixed in a high-speed mixer at a mass ratio of 100:0.28:0.25:0.30 to obtain a mixture III.
(6) The mixture III was subjected to a third sintering under an air atmosphere, heated to 410°C at a rate of 3°C/min, held for 8 hours, and naturally cooled to room temperature. The resulting product was crushed and sieved through a 400-mesh sieve to obtain a low-cobalt layered cathode material D3 having a composition of Li_{1.04}Ni_{0.747}Co_{0.023}Mn_{0.214}Zr_{0.003}Al_{0.009}W_{0.001}Ti_{0.003}O₂. The specific data parameters are shown in Table 1 and Table 2.

### Comparative Example 4

(1) Comparative Example 4 was carried out according to the method of Comparative Example 3, with the following differences: the ratio of lithium carbonate, lithium hydroxide, a nickel-cobalt-manganese precursor, zirconium oxide, and aluminum oxide in mixture I was n(Li₂CO₃):n(LiOH):n(Ni):n(Co):n(Mn):n(Zr):n(Al):n(Y)=0.39:0.26:0.760:0.015:0.218:0.002: 0.003:0.002, and the holding temperature of the constant-temperature stage I during the first sintering was T1=940°C. The other conditions were the same. The low-cobalt layered cathode material D4 having a composition of Li_{1.04}Ni_{0.744}Co_{0.022}Mn_{0.214}Zr_{0.002}Y_{0.002}Al_{0.012}W_{0.001}Ti_{0.003}O₂. The specific data parameters are shown in Table 1 and Table 2.

### Comparative Example 5

(1) Lithium carbonate, lithium hydroxide, a nickel-cobalt-manganese precursor, zirconium oxide, and aluminum oxide were uniformly mixed in a high-speed mixer at a molar ratio of n(Li₂CO₃):n(LiOH):n(Ni):n(Co):n(Mn):n(Zr):n(Al)=0.39:0.26:0.761:0.015:0.219:0.002:0.003 to obtain a mixture I.
(2) The mixture I was heated to 895°C at a rate of 5.5°C/min under an oxygen atmosphere, held for 8.5 hours, and naturally cooled to room temperature. The product was crushed by a colloid mill to obtain an intermediate product I having a D50 of 4.5 µm.
(3) The intermediate product I was uniformly mixed with yttrium oxide in a high-speed mixer at a molar ratio of n(Li_{1.04}Ni_{0.761}Co_{0.015}Mn_{0.219}Zr_{0.002}Al_{0.003}O₂):n(Y)=1:0.002 to obtain a mixture II.
(4) The mixture II was subjected to a second sintering under an oxygen atmosphere, heated to 650°C at a rate of 4.5°C/min and then to 940°C at a rate of 2.5°C/min, held for 8 hours, and naturally cooled to room temperature. The product was crushed to obtain an intermediate product II.
(5) The intermediate product II, aluminum oxide, and cobalt oxyhydroxide were uniformly mixed in a high-speed mixer at a mass ratio of 100:0.19:0.76 to obtain a mixture III.
(6) The mixture III was subjected to a third sintering under an air atmosphere, heated to 750°C at a rate of 3°C/min, held for 8 hours, and naturally cooled to room temperature. The resulting product was crushed to obtain an intermediate product III.
(7) The intermediate product III, aluminum oxide, tungsten oxide, and titanium oxide were uniformly mixed in a high-speed mixer at a mass ratio of 100:0.28:0.25:0.30 to obtain a mixture IV.
(8) The mixture IV was subjected to a fourth sintering under an air atmosphere, heated to 410°C at a rate of 3°C/min, held for 8 hours, and naturally cooled to room temperature. The resulting product was crushed and sieved through a 400-mesh sieve to obtain a low-cobalt layered cathode material D5 having a composition of Li_{1.04}Ni_{0.744}Co_{0.022}Mn_{0.214}Zr_{0.002}Y_{0.002}Al_{0.012}W_{0.001}Ti_{0.003}O₂. The specific data parameters are shown in Table 1 and Table 2.

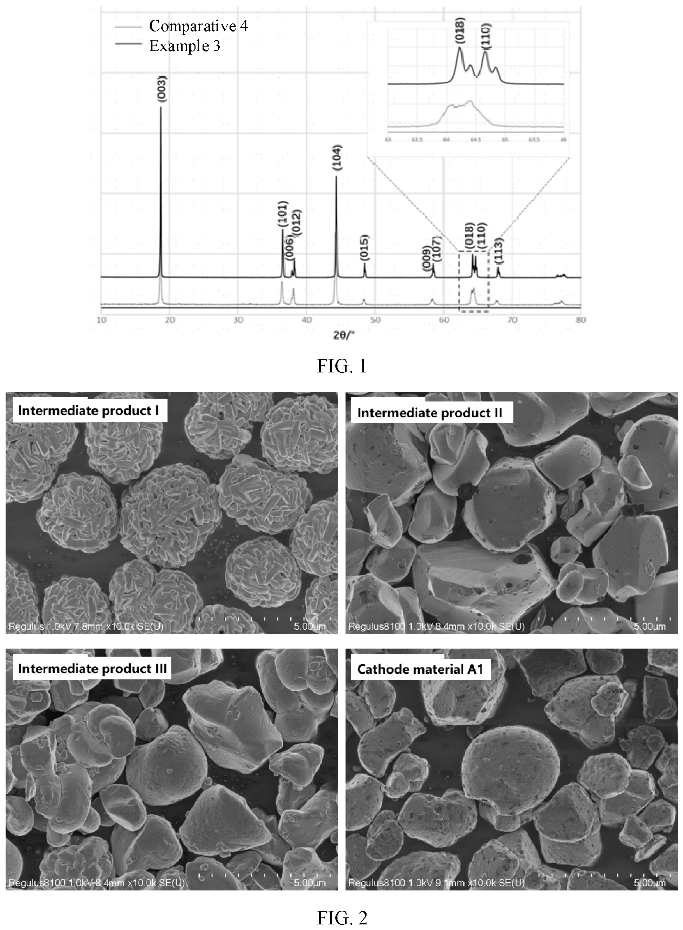

The intermediate products obtained after the four sintering treatments in Example 1 were respectively subjected to SEM observation, and the results are shown in FIG. 2. As can be seen from FIG. 2, intermediate product I presents as single crystals with relatively small grain size, intermediate product II has grown into single crystals with larger particle size, intermediate product III forms a continuous coating layer on the surface of the substrate material, and the cathode material A1 forms discontinuous point-shaped or island-shaped coatings on portions of the surface of the continuous coating layer.

The cathode materials prepared in Examples 1 to Example 11 and Comparative Example 1 to Comparative Example 5 were respectively subjected to XRD analysis, and the parameters S_{D1}-S_{C1}, I_{D1}/I_{C1}, F_{C1} and F_{D1} were calculated, respectively. The results are shown in Table 1. FIG. 1 shows the XRD patterns of the cathode materials of Example 3 and Comparative Example 4.

Lithium-ion half-cells (4.45 V) assembled using the cathode materials prepared in Examples 1 to Example 11 and Comparative Example 1 to Comparative Example 5 were tested for their charge capacity, discharge capacity, initial Coulombic efficiency (ICE), capacity retention after 80 cycles, and DCR increase after 80 cycles. The results are shown in Table 2.

### Charge/discharge capacity and initial Coulombic efficiency tests:

Electrochemical performance of CR2025 coin cells were tested using a Neware battery testing system (Shenzhen). The charge/discharge current density at 0.1 C was 175 mA/g. The charge/discharge voltage was controlled to range from 3.0 V to 4.45 V. The coin cells were subjected to charge/discharge testing at 0.1 C at room temperature to evaluate the charge/discharge specific capacity of the cathode materials. The initial Coulombic efficiency (%) was calculated as: initial discharge specific capacity / initial charge specific capacity × 100%.

### Test method of capacity retention after 80 cycles:

For both examples and Comparative Examples, the charge/discharge voltage was controlled to range from 3.0 V to 4.45 V. At a constant temperature of 45°C, the coin cells were charged and discharged once at 0.1 C for one cycle, and then charged and discharged at 1 C for 80 cycles to evaluate the high-temperature cycling capacity retention of the cathode materials.

### Test method of DCR (impedance) increase:

Before high-temperature cycling, the cell was fully charged, and the impedance at 50% state of charge (SOC) was tested as the initial impedance. After completion of high-temperature cycling, the cell was fully charged again, and the impedance at 50% SOC was tested as the final impedance. The impedance increase rate (%) was calculated as: (final impedance - initial impedance) / initial impedance × 100%.

**[Table 1]**

| Example | Composition | (S_{D1}-S_{C1}) | I_{D1}/I_{C1} | A_{D1}/A_{C1} | I_{C1}/I_{C2} | I_{D1}/I_{D2} | F_{C1} | F_{D1} |
|---|---|---|---|---|---|---|---|---|
| Example 1 | Li_{1.04}Ni_{0.747}Co_{0.023}Mn_{0.21 4}Zr_{0.003}Al_{0.009}W_{0.001}Ti_{0.00 3}O₂ | 0.45 | 0.95 | 1.00 | 1.97 | 2.14 | 0.15 | 0.15 |
| Example 2 | Li_{1.04}Ni_{0.745}Co_{0.023}Mn_{0.21 4}Zr_{0.002}Al_{0.012}W_{0.001}Ti_{0.00 3}O₂ | 0.41 | 0.93 | 0.94 | 1.89 | 2.10 | 0.14 | 0.15 |
| Example 3 | Li_{1.04}Ni_{0.744}Co_{0.022}Mn_{0.21 4}Zr_{0.002}Y_{0.002}Al_{0.012}W_{0.00 1}Ti_{0.003}O₂ | 0.45 | 0.92 | 0.94 | 1.84 | 2.15 | 0.13 | 0.14 |
| Example 4 | Li_{1.04}Ni_{0.753}Co_{0.015}Mn_{0.21 6}Zr_{0.002}Y_{0.002}Al_{0.008}W_{0.00 1}Ti_{0.003}O₂ | 0.39 | 0.96 | 0.98 | 1.98 | 2.19 | 0.15 | 0.17 |
| Example 5 | Li_{1.04}Ni_{0.740}Co_{0.022}Mn_{0.21 3}Zr_{0.002}Y_{0.002}B_{0.005}Al_{0.012} W_{0.001}Ti_{0.003}O₂ | 0.43 | 0.93 | 0.94 | 1.79 | 1.83 | 0.12 | 0.13 |
| Example 6 | Li_{1.04}Ni_{0.718}Co_{0.020}Mn_{0.23 9}Zr_{0.002}Y_{0.002}Al_{0.013}W_{0.00 1}Ti_{0.005}O₂ | 0.43 | 0.90 | 0.91 | 1.78 | 1.79 | 0.11 | 0.13 |
| Example 7 | Li_{1.04}Ni_{0.775}Co_{0.019}Mn_{0.18 3}Zr_{0.002}Y_{0.002}Al_{0.013}W_{0.00 1}Ti_{0.005}O₂ | 0.43 | 0.92 | 0.95 | 1.82 | 1.85 | 0.11 | 0.12 |
| Example 8 | Li_{1.04}Ni_{0.740}Co_{0.022}Mn_{0.21 3}Mg_{0.002}Y_{0.002}B_{0.005}Al_{0.01 2}W_{0.001}Ti_{0.003}O₂ | 0.42 | 0.96 | 1.00 | 1.78 | 1.85 | 0.14 | 0.15 |
| Example 9 | Li_{1.04}Ni_{0.740}Co_{0.022}Mn_{0.21 3}Si_{0.002}Y_{0.002}B_{0.005}Al_{0.012} W_{0.001}Ti_{0.003}O₂ | 0.43 | 0.95 | 1.01 | 1.79 | 1.90 | 0.14 | 0.14 |
| Example 10 | Li_{1.04}Ni_{0.740}Co_{0.022}Mn_{0.21 3}Zr_{0.002}Ta_{0.002}B_{0.005}Al_{0.01 2}W_{0.001}Ti_{0.003}O₂ | 0.42 | 0.95 | 0.98 | 1.78 | 1.92 | 0.17 | 0.18 |
| Example 11 | Li_{1.04}Ni_{0.740}Co_{0.022}Mn_{0.21 3}Zr_{0.002}B_{0.005}Al_{0.012}W_{0.00 3}Ti_{0.003}O₂ | 0.41 | 0.96 | 0.99 | 1.77 | 2.05 | 0.16 | 0.17 |
| Comparative Example 1 | Li_{1.04}Ni_{0.747}Co_{0.023}Mn_{0.21 4}Zr_{0.003}Al_{0.009}W_{0.001}Ti_{0.00 3}O₂ | 0.33 | 1.09 | 1.14 | 1.58 | 1.97 | 0.26 | 0.34 |
| Comparative Example 2 | Li_{1.04}Ni_{0.747}Co_{0.023}Mn_{0.21 4}Zr_{0.003}Al_{0.009}W_{0.001}Ti_{0.00 3}O₂ | 0.44 | 1.02 | 1.10 | 1.79 | 2.03 | 0.31 | 0.19 |
| Comparative Example 3 | Li_{1.04}Ni_{0.747}Co_{0.023}Mn_{0.21 4}Zr_{0,003}Al_{0.009}W_{0.001}Ti_{0.00 3}O₂ | 0.33 | 1.03 | 1.12 | 1.65 | 1.95 | 0.33 | 0.35 |
| Comparative Example 4 | Li_{1.04}Ni_{0.744}Co_{0.022}Mn_{0.21 4}Zr_{0.002}Y_{0.002}Al_{0.012}W_{0.00 1}Ti_{0.003}O₂ | 0.28 | 1.16 | 1.31 | 1.45 | 2.50 | 0.39 | 0.41 |
| Comparative Example 5 | Li_{1.04}Ni_{0.744}Co_{0.022}Mn_{0.21 4}Zr_{0.002}Y_{0.002}Al_{0.012}W_{0.00 1}Ti_{0.003}O₂ | 0.37 | 1.11 | 1.19 | 1.68 | 1.93 | 0.18 | 0.33 |

**[Table 2]**

| Example | Charge capacity (mAh/g) | Discharge capacity (mAh/g) | Initial Columbic efficiency (%) | Capacity retention after 80 cycles (%) | DCR increase after 80 cycles (%) |
|---|---|---|---|---|---|
| Example 1 | 238.3 | 213.8 | 89.7 | 91.4 | 132 |
| Example 2 | 238.4 | 215.1 | 90.2 | 92.0 | 128 |
| Example 3 | 237.4 | 213.1 | 89.8 | 92.4 | 117 |
| Example 4 | 236.5 | 211.0 | 89.2 | 89.5 | 155 |
| Example 5 | 240.5 | 216.9 | 90.2 | 92.0 | 111 |
| Example 6 | 237.8 | 212.5 | 89.4 | 91.7 | 105 |
| Example 7 | 237.1 | 213.9 | 90.2 | 93.5 | 95 |
| Example 8 | 240.7 | 215.9 | 89.7 | 91.6 | 124 |
| Example 9 | 240.1 | 215.1 | 89.6 | 91.8 | 123 |
| Example 10 | 240.8 | 217.7 | 90.4 | 91.5 | 132 |
| Example 11 | 240.4 | 218.0 | 90.7 | 90.8 | 142 |
| Comparative example 1 | 232.8 | 201.4 | 86.5 | 80.5 | 355 |
| Comparative Example 2 | 235.9 | 205.0 | 86.9 | 85.8 | 220 |
| Comparative Example 3 | 233.6 | 202.8 | 86.8 | 81.2 | 328 |
| Comparative Example 4 | 233.1 | 198.1 | 85.0 | 77.4 | 371 |
| Comparative Example 5 | 233.4 | 204.2 | 87.5 | 83.5 | 301 |

As can be seen from Table 1 and Table 2, compared to Comparative Example 1 to Comparative Example 5, Examples 1 to Example 11 exhibit significantly improved charge capacity, discharge capacity, initial Coulombic efficiency, and capacity retention after 80 cycles, as well as significantly reduced DCR increase after 80 cycles. Specifically, the high-temperature cycling capacity retention after 80 cycles for Example 1 to Example 11 of the present disclosure was all above 89%, and the DCR increase was all below 160%. In contrast, the high-temperature cycling capacity retention after 80 cycles for Comparative Example 1 to Comparative Example 5 was all below 86%, and the DCR increase was all above 220%. These results demonstrate that, by limiting parameters within the ranges of 0.80≤I_{D1}/I_{C1}≤1.00, 0.80≤A_{D1}/A_{C1}≤1.05, 0.35°≤S_{D1}-S_{C1}≤0.65°, 1.77≤I_{C1}/I_{C2}≤1.98, 1.78≤ I_{D1}/I_{D2}≤2.19, 0°<F_{C1}≤0.20° and 0°<F_{D1}≤0.20°, the initial charge/discharge efficiency, discharge capacity, and cycling performance of the battery can be effectively improved, while the initial impedance and impedance increase of the battery can be effectively reduced. In addition, by comparing Examples 1 to Example 11, it can be observed that, compared to Example 1, Example 4, Example 10, and Example 11, Example 3 and Example 5 to Example 7 exhibit further improvements in charge capacity, discharge capacity, initial Coulombic efficiency and capacity retention after 80 cycles, along with a further reduction in DCR increase after 80 cycles. In particular, Example 7 exhibits the most excellent comprehensive performance. These results demonstrates that, by limiting parameters within the ranges of 0.85≤I_{D1}/I_{C1}≤0.95, 0.85≤A_{D1}/A_{C1}≤1.00, 0.40°≤S_{D1}-S_{C1}≤0.60°, 1.80≤I_{C1}/I_{C2}≤1.95, 1.80≤I_{D1}/I_{D2}≤2.00, 0.05°≤F_{C1}≤0.15° and 0.05°≤F_{D1}≤0.15°, the initial charge/discharge efficiency, discharge capacity, and cycling performance of the battery can be further effectively improved, while the initial impedance and impedance increase of the battery can be further reduced.

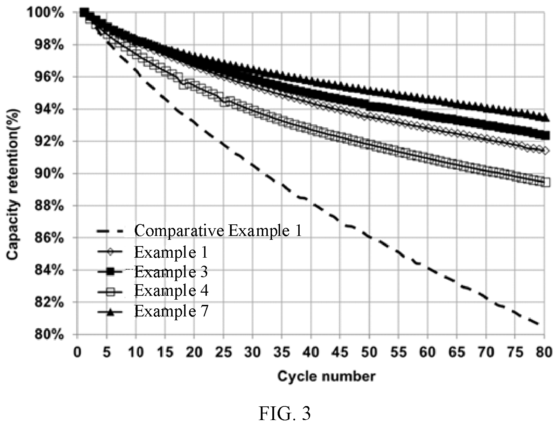

FIG. 3 is a graph of the cycling capacity retention of batteries prepared from the low-cobalt layered cathode materials of Example 1, Example 3, Example 4, Example 7, and Comparative Example 1, in which the abscissa represents the number of cycles, and the ordinate represents the capacity retention. The cycle life test was carried out at 45°C with a charge/discharge rate of 1 C within a voltage range of 3.0 V to 4.45 V.

As can be seen from FIG. 3, compared to Comparative Example 1, the cycling capacity retention of Example 1, Example 3, Example 4, and Example 7 was significantly improved. This further confirms that, by limiting parameters within the ranges of 0.80≤I_{D1}/I_{C1}≤1.00, 0.80≤A_{D1}/A_{C1}≤1.05, 0.35°≤S_{D1}-S_{C1}≤0.65°, 1.77≤I_{C1}/I_{C2}≤1.98, 1.78≤I_{D1}/I_{D2}≤2.19, 0°<F_{C1}≤0.20° and 0°<F_{D1}≤0.20°, the cycling performance of the batteries can be effectively improved.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples. In addition, different embodiments or examples and features of different embodiments or examples described in the specification may be combined by those skilled in the art, unless they are contradictory to each other.

Although embodiments of the present disclosure have been shown and described, it would be appreciated by those skilled in the art that the above embodiments cannot be construed to limiting the present disclosure, and changes, modifications, alternatives, and alterations can be made in the embodiments without departing from scope of the present disclosure.

## Claims

1. A cathode active material, wherein in an X-ray diffraction, XRD, pattern of the cathode active material:
a characteristic peak C (018) corresponding to (018) crystal plane of the cathode active material has a double-peak profile comprising a first characteristic peak C¹ (018) located on a low-angle side and a second characteristic peak C² (018) located on a high-angle side; and
a characteristic peak D (110) corresponding to (110) crystal plane of the cathode active material has a double-peak profile comprising a first characteristic peak D¹ (110) on a low-angle side and a second characteristic peak D² (110) on a high-angle side, and
wherein the cathode active material satisfies 0.80≤I_{D1}/I_{C1}≤1.00, wherein: I_{C1} represents an intensity of the first characteristic peak C¹ (018) corresponding to the (018) crystal plane of the cathode active material; and I_{D1} represents an intensity of the first characteristic peak D¹ (110) corresponding to the (110) crystal plane of the cathode active material.

2. The cathode active material according to claim 1, wherein I_{C1} and I_{D1} satisfy 0.85≤I_{D1}/I_{C1}≤0.95.

3. The cathode active material according to claim 1 or 2, satisfying 0.80≤A_{D1}/A_{C1}≤1.05, wherein:
A_{C1} represents a peak area of the first characteristic peak C¹ (018) corresponding to the (018) crystal plane of the cathode active material; and
A_{D1} represents a peak area of the first characteristic peak D¹ (110) corresponding to the (110) crystal plane of the cathode active material.

4. The cathode active material according to claim 3, satisfying 0.85≤A_{D1}/A_{C1}≤1.00.

5. The cathode active material according to any one of claims 1 to 4, satisfying 0.35°≤S_{D1}-S_{C1}≤0.65°, wherein:
S_{C1} represents a value of 2θ of the first characteristic peak C¹ (018) corresponding to the (018) crystal plane of the cathode active material; and
S_{D1} represents a value of 2θ of the first characteristic peak D¹ (110) corresponding to the (110) crystal plane of the cathode active material.

6. The cathode active material according to claim 5, satisfying 0.40°≤S_{D1}-S_{C1}≤0.60°.

7. The cathode active material according to any one of claims 1 to 6, satisfying 1.77≤I_{C1}/I_{C2}≤1.98 and 1.78≤I_{D1}/I_{D2}≤2.19, wherein:
I_{C2} represents an intensity of a second characteristic peak C² (018) corresponding to the (018) crystal plane of the cathode active material; and
I_{D2} represents an intensity of a second characteristic peak D² (110) corresponding to the (110) crystal plane of the cathode active material.

8. The cathode active material according to claim 7, satisfying 1.80≤I_{C1}/I_{C2}≤1.95 and 1.80≤I_{D1}/I_{D2}≤2.00.

9. The cathode active material according to any one of claims 1 to 8, satisfying 0°<F_{C1}≤0.20° and 0°<F_{D1}≤0.20°, wherein:
F_{C1} represents a full width at half maximum of the first characteristic peak C¹ (018) corresponding to the (018) crystal plane of the cathode active material; and
F_{D1} represents a full width at half maximum of the first characteristic peak D¹ (110) corresponding to the (110) crystal plane of the cathode active material.

10. The cathode active material according to claim 9, satisfying 0.05°≤F_{C1}≤0.15° and 0.05°≤F_{D1}≤0.15°.

11. The cathode active material according to any one of claims 1 to 10, having a chemical formula of Liₐ(NiₓCo_{y}Mn_{z}M_{b}R_{c})O₂, where:
0.95≤a≤1.10, 0.50≤x≤0.95, 0≤y≤0.05, 0≤z≤0.45, 0≤b≤0.05, 0≤c≤0.03, and at least one of b and c is not 0; and
M and R are each independently selected from at least one of B, Mg, Sr, Ba, Fe, Cu, Ni, Co, Mn, Sc, Y, La, Ce, Sm, Eu, Gd, Tb, Dy, Yb, Lu, Ti, Zr, Hf, V, Nb, Ta, Cr, Mo, W, Ru, Rh, Ir, Zn, Al, Ga, In, Si, Pb, Cd, Ge, Sn, Sb, Bi, or Te.

12. The cathode active material according to any one of claims 1 to 11, comprising:
a substrate material; and
a coating layer disposed on at least a portion of a surface of the substrate material.

13. The cathode active material according to claim 12, wherein the coating layer comprises:
a continuous coating layer; and
a coating protrusion protruding from a surface of the continuous coating layer, the coating protrusion comprising at least one of a point-shaped coating and an island-shaped coating.

14. The cathode active material according to claim 13, wherein:
the continuous coating layer comprises at least one of Al-containing lithium cobalt oxide, W-containing lithium cobalt oxide, Zr-containing lithium cobalt oxide, or B-containing lithium cobalt oxide; and/or
the coating protrusion comprises at least one of aluminum oxide, tungsten oxide, titanium oxide, boron oxide, strontium oxide, Al-containing lithium oxide, W-containing lithium oxide, Ti-containing lithium oxide, B-containing lithium oxide, or Sr-containing lithium oxide.

15. A method for preparing the cathode active material according to any one of claims 1 to 14, the method comprising:
mixing a nickel-cobalt-manganese precursor, a first lithium source, and a first doping additive in a stoichiometric ratio, and performing a first sintering to obtain a first sintered product;
mixing the first sintered product with a second lithium source and an optional second doping additive in a stoichiometric ratio, and performing a second sintering to obtain a second sintered product; and
mixing the second sintered product with a coating agent, and performing a third sintering to obtain the cathode active material.

16. The method according to claim 15, wherein:
the first sintering comprises a first heating stage and a first constant-temperature stage, wherein a heating rate of the first heating stage ranges from 1°C/min to 15°C/min, wherein a temperature of the first constant-temperature stage ranges from 600°C to 1,000°C, and wherein a duration of the first constant-temperature stage ranges from 2 hours to 20 hours; and/or
the second sintering comprises a second heating stage, a third heating stage, and a second constant-temperature stage, wherein a heating rate of the second heating stage is greater than a heating rate of the third heating stage and a difference between the heating rate of the second heating stage and the heating rate of the third heating stage ranges from 1°C/min to 5°C/min, wherein a temperature of the second constant-temperature stage ranges from 600°C to 1,200°C, and wherein a duration of the second constant-temperature stage ranges from 2 hours to 24 hours.

17. The method according to claim 15 or 16, wherein:
the first doping additive is selected from at least one of an oxide containing doping element M or a hydroxide containing doping element M; and/or
the second doping additive is selected from at least one of an oxide containing doping element R or a hydroxide containing doping element R; and/or
the first lithium source comprises lithium carbonate, and the second lithium source comprises lithium hydroxide, wherein a molar ratio of the first lithium source to the second lithium source is (30 to 90):(10 to 70).

18. The method according to any one of claims 15 to 17, wherein said mixing the second sintered product with the coating agent, and performing the third sintering comprises:
mixing the second sintered product with a first coating agent, and performing the third sintering to obtain a third sintered product; and
mixing the third sintered product with a second coating agent, and performing a fourth sintering to obtain the cathode active material.

19. The method according to claim 18, wherein:
the third sintering comprises a fourth heating stage and a third constant-temperature stage, wherein a heating rate of the fourth heating stage ranges 1°C/min to 15°C/min, wherein a temperature of the third constant-temperature stage ranges from 500°C to 1000°C, and wherein a duration of the third constant-temperature stage ranging from 2 hours to 20 hours; and/or
the fourth sintering comprises a fifth heating stage and a fourth constant-temperature stage, wherein a heating rate of the fifth heating stage ranges from 1°C/min to 15°C/min, wherein a temperature of the fourth constant-temperature stage ranges from 200°C to 800°C, and wherein a duration of the fourth constant-temperature stage ranges from 2 hours to 20 hours; and/or
the first coating agent is selected from at least one of an oxide of Al, W, Zr, or B, a hydroxide of Al, W, Zr, or B, or a carbonate of Al, W, Zr, or B; and/or
the second coating agent is selected from at least one of an oxide of Al, W, Ti, B, or Sr, a hydroxide of Al, W, Ti, B, or Sr, or a carbonate of Al, W, Ti, B, or Sr; and/or
a mass of the first coating agent is 0.01% to 2% of a mass of the second sintered product; and/or
a mass of the second coating agent is 0.01% to 2% of a mass of the third sintered product.

20. A cathode electrode plate, comprising:
the cathode active material according to any one of claims 1 to 14; or
the cathode active material prepared by the method according to any one of claims 15 to 19.

21. A battery, comprising the cathode electrode plate according to claim 20.

22. An electrical device, comprising the battery according to claim 21.
